# EUROPÄISCHE PATENTSCHRIFT

(11) **EP 2 361 808 B1**
(45) Veröffentlichungstag und Bekanntmachung des Hinweises auf die Patenterteilung: **10.07.2013**
(21) Anmeldenummer: 11155765.8
(22) Anmeldetag: 24.02.2011
(51) Int. Cl.: B60R 9/06

(54) **Hecklastenträger**
Rear load carrier
Porte-charge arrière

(30) Priorität: 25.02.2010 DE 102010002363
(43) Veröffentlichungstag der Anmeldung: 31.08.2011
(73) Patentinhaber: SCAMBIA Industrial Developments Aktiengesellschaft, 9494 Schaan (LI)
(72) Erfinder: Riehle, Jörg, 71679, Asperg (DE); Rimmelspacher, Bernhard, 76287, Rheinstetten (DE); Möhring, Siegfried, 71696, Möglingen (DE)
(74) Vertreter: Hoeger, Stellrecht & Partner Patentanwälte

(56) Entgegenhaltungen:
- DE-A1- 4 135 794
- DE-A1- 4 325 147

## Beschreibung

Die Erfindung betrifft einen Hecklastenträger umfassend ein Trägergestell, eine am Trägergestell gehaltene Kugelhalsaufnahme, die auf einen eine Kupplungskugel tragenden Endabschnitt eines Kugelhalses einer Anhängekupplung aufsetzbar ist, und eine an der Kugelhalsaufnahme gehaltene Fixiereinrichtung, welche sich am Kugelhals abstützt.

Die DE 43 25 147 A1 wird als nächstsehender Stand der Technik gesehen, und offenbart einen Hecklastenträger umfassend ein Trägergestell, eine am Trägergestell gehaltene Kugelhalsaufnahme, die auf einen eine Kupplungskugel tragenden Endabschnitt eines Kugelhalses einer Anhängekupplung aufsetzbar ist, und eine an der Kugelhalsaufnahme gehaltene Fixiereinrichtung, wobei die Fixiereinrichtung einen Haltefinger aufweist. Bei diesen Hechlastenträger ist beispielsweise vorgesehen, dass die Kugelhalsaufnahme durch eine Klemmung, insbesondere im Bereich der Kupplungskugel, an dem Kugelhals fixierbar ist.

Derartige Klemmungen haben jedoch den Nachteil, dass bei diesen Probleme mit der dauerhaften Festigkeit der Fixierung auftreten, es sei denn, es werden sehr große Kräfte zur Fixierung aufgebracht und diese wiederum haben den Nachteil, dass damit Beschädigungen der Anhängekupplung auftreten können, so dass spätestens ein Anhängen eines Anhängers aufgrund der Beschädigungen Probleme bereiten kann.

Der Erfindung liegt daher die Aufgabe zugrunde, einen Hecklastenträger der gattungsgemäßen Art derart zu verbessern, dass dieser sicher und zuverlässig an einem Kugelhals einer Anhängekupplung fixiert werden kann.

Diese Aufgabe wird bei einem Hecklastenträger der eingangs beschriebenen Art erfindungsgemäß durch die Merkmale des Anspruchs 1 gelöst.

Der Vorteil der erfindungsgemäßen Lösung ist somit darin zu sehen, dass damit die Möglichkeit geschaffen wurde, die Fixiereinrichtung als formschlüssig arbeitende Fixiereinrichtung auszubilden und damit eine verbesserte Festlegung des Hecklastenträgers am Kugelhals zu erreichen.

Ein Eingreifen des Haltefingers in den Durchbruch umfasst dabei auch, dass der Haltefinger den Durchbruch durchgreift.

Hinsichtlich der Bewegbarkeit des Haltefingers zwischen der Fixierstellung und der Freigabestellung wurden bisher keine weiteren Angaben gemacht. So sieht eine vorteilhafte Lösung vor, dass der Haltefinger an einer Verschiebevorrichtung gehalten ist, mit welcher der Haltefinger von der Freigabestellung in die Fixierstellung oder umgekehrt bewegbar ist.

Besonders günstig ist es dabei, wenn die Verschiebevorrichtung eine Vorrichtungsbasis aufweist, die an der Kugelhalsaufnahme gehalten ist.

Ein Verschieben des Haltefingers ist vorzugsweise dadurch möglich, dass mit einem an der Verschiebevorrichtung verschiebbar gelagerten Verschiebekörper der Haltefinger zwischen der Freigabestellung und der Fixierstellung bewegbar ist.

Dabei könnte die Verbindung zwischen dem Verschiebekörper und dem Haltefinger so sein, dass sich der Haltefinger immer noch unabhängig vom Verschiebekörper bewegen kann und der Verschiebekörper nur jeweils zum Verschieben des Haltefingers auf diesen einwirkt.

Eine konstruktiv besonders einfache Lösung sieht jedoch vor, dass der Verschiebekörper starr mit dem Haltefinger gekoppelt ist, so dass das Verschieben des Verschiebekörpers sich in gleicher Weise auf den Haltefinger überträgt.

Ferner wurden bislang keine näheren Angaben gemacht, wie der Haltefinger an der Kugelhalsaufnahme angeordnet sein soll.

Eine vorteilhafte Lösung sieht dabei vor, dass der Halteträger in einer Führungsbohrung an der Kugelhalsaufnahme geführt ist und somit gegen Bewegungen quer zur Führungsbohrung gesichert ist.

Besonders günstig ist es, wenn der Haltefinger bei auf dem Kugelhals aufgesetztem Hecklastenträger in der Fixierstellung sowohl in eine Führungsbohrung als auch in eine mit der Führungsbohrung fluchtende Aufnahmebohrung an der Kugelhalsaufnahme eingreift.

Um zusätzlich zu der Fixierung der Kugelhalsaufnahme mittels des Haltefingers noch eine weitere Fixierung, insbesondere eine spielarme Fixierung der Kugelhalsaufnahme am Kugelhals zu erreichen, ist bei einer weiteren verbesserten Ausführungsform an der Kugelhalsaufnahme eine Klemmvorrichtung vorgesehen, mit welcher eine Klemmverbindung zwischen der Kugelhalsaufnahme und dem Kugelhals herstellbar ist.

Beispielsweise ist dabei die Klemmvorrichtung so ausgebildet, dass sie zwei Klemmelemente aufweist, die zum Erreichen einer Klemmstellung in einer Klemmrichtung aufeinanderzu bewegbar sind.

Um die Klemmelemente in der Klemmrichtung zu bewegen könnte eine separate Spannvorrichtung für die Klemmbacken vorgesehen sein.

Eine besonders vorteilhafte Lösung sieht jedoch vor, dass die Klemmelemente beim Bewegen der Verschiebevorrichtung von der Freigabestellung in die Fixierstellung in der Klemmrichtung bewegbar sind.

Besonders günstig ist es, wenn die Klemmelemente in ihrer Klemmstellung von der in der Fixierstellung stehenden Verschiebevorrichtung beaufschlagt sind und somit auch von der Verschiebevorrichtung in der Klemmstellung gehalten werden.

Ferner ist vorzugsweise auch zum Lösen der Klemmung vorgesehen, dass die Klemmelemente beim Bewegen der Verschiebevorrichtung von der Fixierstellung in die Freigabestellung in eine nichtklemmende Montagestellung bewegbar sind.

Beispielsweise ist die Klemmvorrichtung so ausgebildet, dass sie zwei Klemmbacken aufweist, die zum Erreichen einer Klemmstellung in einer Klemmrichtung aufeinanderzu bewegbar sind.

Um die Klemmbacken in der Klemmrichtung zu bewegen könnte eine separate Spannvorrichtung für die Klemmbacken vorgesehen sein.

Eine besonders vorteilhafte Lösung sieht jedoch vor, dass die Klemmbacken beim Bewegen der Verschiebevorrichtung von der Freigabestellung in die Fixierstellung in der Klemmrichtung bewegbar sind.

Besonders günstig ist es, wenn die Klemmbacken in ihrer Klemmstellung von der in der Fixierstellung stehenden Verschiebevorrichtung beaufschlagt sind und somit auch von der Verschiebevorrichtung in der Klemmstellung gehalten werden.

Ferner ist vorzugsweise auch zum Lösen der Klemmung vorgesehen, dass die Klemmbacken beim Bewegen der Verschiebevorrichtung von der Fixierstellung in die Freigabestellung in eine nichtklemmende Montagestellung bewegbar sind.

Hinsichtlich des Orts der Klemmung am Kugelhals wurden bislang ebenfalls keine näheren Angaben gemacht.

So könnte beispielsweise die Klemmvorrichtung an völlig anderen Bereichen des Kugelhalses angreifen, die unabhängig von dem Eingreifen des Haltefingers in den Durchbruch also auch unabhängig von der Anordnung des Durchbruchs am Kugelhals sind.

Eine besonders günstige Lösung sieht jedoch vor, dass mit der Klemmvorrichtung der Kugelhals im Bereich des Durchbruchs klemmbar ist, das heißt, dass sowohl der Haltefinger als auch die Klemmvorrichtung in denselben Bereichen des Kugelhalses angreifen.

Hinsichtlich der Anordnung des Durchbruchs am Kugelhals wurden bislang keine näheren Angaben gemacht.

Der Durchbruch kann am Kugelhals selbst angeordnet oder in den Kugelhals eingeformt sein.

Prinzipiell könnte dabei der Durchbruch an beliebiger Stelle des Kugelhalses vorgesehen sein.

Eine besonders vorteilhafte Lösung sieht dabei vor, dass der Durchbruch in einem Haltebereich des Kugelhalses angeordnet ist, der auf einer der Kupplungskugel gegenüberliegenden Seite eines sich unmittelbar an die Kupplungskugel anschließenden Zylinderabschnitts liegt.

Damit besteht die Möglichkeit, in relativer Nähe zur Kupplungskugel den Durchbruch vorzusehen und somit die Ausformung des Kugelhalses unabhängig von der relativen Anordnung zwischen Kupplungskugel und Durchbruch vornehmen zu können.

Eine besonders günstige Lösung sieht vor, dass der Haltebereich ausgehend von dem Zylinderabschnitt eine Ausdehnung aufweist, die maximal einem Eineinhalbfachen eines Kupplungskugeldurchmessers entspricht.

Das heißt, dass der Haltebereich in Richtung des Verlaufs des Kugelhalses eine Ausdehnung aufweist, die auf den Eineinhalbfachen Durchmesser der Kupplungskugel begrenzt ist.

Ferner ist vorzugsweise vorgesehen, dass der Durchbruch einen durch den Zylinderabschnitt definierten geometrischen Zylinderraum, der sich in den Haltebereich hineinerstreckt durchsetzt.

Besonders vorteilhaft ist es, wenn der Durchbruch symmetrisch zu einer Mittellinie des Haltebereichs angeordnet ist.

Eine weitere vorteilhafte Lösung sieht jedoch vor, dass der Durchbruch an einem Vorsprung des Kugelhalses angeordnet ist.

Ein derartiger Vorsprung des Kugelhalses ist vorzugsweise als nicht zur Stabilität des Kugelhalses beitragender Teil desselben ausgebildet, so dass sich in diesem problemlos der Durchbruch anordnen lässt.

Eine Möglichkeit der Anordnung eines derartigen Vorsprungs mit einem Durchbruch sieht vor, dass dieser als Öse ausgebildet ist, in welche ein Abreißseil im Anhängebetrieb eingehängt werden kann.

Ferner wurden bislang auch keine näheren Angaben gemacht, an welchem Teil des Kugelhalses die Klemmvorrichtung angreift. Diese könnte prinzipiell an jedem geeigneten Teil des Kugelhalses angreifen.

Besonders vorteilhaft ist es jedoch ebenfalls, wenn die Klemmvorrichtung an einem Vorsprung des Kugelhalses angreift, der grundsätzlich unterschiedlich von dem Vorsprung mit dem Durchbruch sein kann.

Besonders günstig ist es jedoch, wenn der Vorsprung, an dem die Klemmvorrichtung angreift, mit dem den Durchbruch aufweisenden Vorsprung identisch ist.

Hinsichtlich der Ausbildung der Kugelhalsaufnahme selbst wurden im Zusammenhang mit der bisherigen Erläuterung der einzelnen Ausführungsformen keine näheren Angaben gemacht.

So sieht eine besonders vorteilhafte Lösung vor, dass die Kugelhalsaufnahme eine Kupplungskugelaufnahme aufweist, das heißt, dass die Kugelhalsaufnahme selbst mit der Kupplungskugelaufnahme an der Kupplungskugel des Kugelhalses angreift.

Besonders günstig ist es dabei, wenn die Kupplungskugelaufnahme und die Kupplungskugel zusammen ein Kugelgelenk bilden, mit welchem die Kugelhalsaufnahme gelenkig an dem Kugelhals gehalten ist, insbesondere abgestützt ist.

Ferner hat eine derartige Kupplungskugelaufnahme den Vorteil, dass diese die Möglichkeit eröffnet, die vom Hecklastenträger aufzunehmende Last im Bereich der Kupplungskugel in den Kugelhals einzuleiten und somit an einer Stelle in den Kugelhals einzuleiten, die aufgrund des Anhängebetriebs explizit hierfür vorgesehen ist.

Um vorteilhafterweise die Kugelhalsaufnahme am Kugelhals festlegen zu können, ist vorgesehen, dass der Kugelhals eine Abstützfläche für die Kugelhalsaufnahme aufweist.

Vorzugsweise ist dabei der Kugelhals auf einer Rückseite mit der Abstützfläche für die Kugelhalsaufnahme versehen.

Darüber hinaus ist es vorteilhaft, wenn der Kugelhals Seitenanlageflächen für die Kugelhalsaufnahme aufweist.

Diese Seitenanlageflächen dienen insbesondere dazu, die Kugelhalsaufnahme gegen ein seitliches Kippen relativ zum Kugelhals zu stabilisieren.

Besonders günstig ist es dabei, wenn Klemmflächen der Klemmvorrichtung an die Seitenanlageflächen anlegbar sind, um zwischen den Klemmflächen der Klemmvorrichtung den Kugelhals einzuklemmen.

Insbesondere dann, wenn der Durchbruch den Kugelhals durchsetzt, ist vorzugsweise vorgesehen, dass die Seitenanlageflächen den Durchbruch umschließend angeordnet sind.

Zur Fixierung der Kugelhalsaufnahme an dem Kugelhals ist vorzugsweise vorgesehen, dass die Kugelhalsaufnahme sich mit mindestens einem Fortsatz über die Kupplungskugelaufnahme hinaus längs des Endabschnitts des Kugelhalses erstreckt und dass an dem mindestens einen Fortsatz der Haltefinger angeordnet ist.

Insbesondere ist es hierbei günstig, wenn die Kugelhalsaufnahme zwei sich beiderseits entlang des Endabschnitts des Kugelhalses von der Kupplungskugelaufnahme ausgehend erstreckende Fortsätze aufweist, so dass der Endabschnitt des Kugelhalses zwischen diesen Fortsätzen liegt und zwischen diesen aufgenommen ist.

Beispielsweise sind dabei die Fortsätze so ausgebildet, dass diese die Klemmbacken tragen.

Um die Klemmbacken klemmend an dem Kugelhals anlegen zu können, ist dabei vorzugsweise vorgesehen, dass die Fortsätze in der Klemmrichtung aufeinanderzu bewegbar sind.

Eine derartige Bewegbarkeit der Fortsätze könnte entweder durch ein in den Fortsätzen vorgesehenes Gelenk erreicht werden.

Eine besonders günstige Lösung sieht jedoch vor, dass die Fortsätze in der Klemmrichtung durch elastische Deformation aufeinanderzu bewegbar sind.

Ferner wurden keine näheren Angaben zur Anordnung der Verschiebevorrichtung relativ zu den Fortsätzen gemacht.

So sieht eine vorteilhafte Lösung vor, dass die Verschiebevorrichtung mit einer Vorrichtungsbasis an einem der Fortsätze gehalten ist.

Dabei ist es günstig, wenn mit dem in der Vorrichtungsbasis verschiebbar gelagerten Verschiebekörper der andere Fortsatz in der Klemmrichtung beaufschlagbar ist.

Zur stabilen Führung der Kugelhalsaufnahme sieht eine weitere vorteilhafte Lösung vor, dass die Kugelhalsaufnahme mit einem Führungskörper den Endabschnitt des Kugelhalses übergreift, das heißt sich über den Endabschnitt des Kugelhalses hinwegerstreckt.

Vorzugsweise ist dabei vorgesehen, dass der Führungskörper eine Rückseite des Kugelhalses übergreift, insbesondere dabei eine Abstützfläche an der Rückseite des Kugelhalses übergreift.

Alternativ oder ergänzend hierzu ist es besonders vorteilhaft, wenn der Führungskörper Seitenflächen des Kugelhalses übergreift, insbesondere Seitenanlageflächen des Kugelhalses übergreift, und an diesen anlegbar ist.

Die eingangs genannte Aufgabe wird alternativ oder ergänzend zu den bislang beschriebenen Ausführungsformen durch einen Hecklastenträger umfassend ein Trägergestell, eine am Trägergestell gehaltene Kugelhalsaufnahme, die auf einen eine Kupplungskugel tragenden Endabschnitt eines Kugelhalses einer Anhängekupplung aufsetzbar ist und eine an der Kugelhalsaufnahme gehaltene Fixiereinrichtung erfindungsgemäß dadurch gelöst, dass das Trägergestell und die Kugelhalsaufnahme durch eine Einstelleinrichtung relativ zueinander ausrichtbar sind.

Eine derartige Einstelleinrichtung schafft die Möglichkeit, das Trägergestell relativ zu der Kugelhalsaufnahme präzise auszurichten, so dass Positionsungenauigkeiten die durch verschiedene Ausbildungen des Kugelhalses entstehen und somit im Bereich der Kugelhalsaufnahme auftreten, im Hinblick auf die Ausrichtung des Trägergestells relativ zur Karosserie des Kraftfahrzeugs korrigiert werden können.

Insbesondere ist es dabei vorteilhaft, wenn mit der Einstelleinrichtung eine Neigungseinstellung des Trägergestells des Hecklastenträgers möglich ist.

Besonders günstig ist es dabei, wenn die Einstelleinrichtung ein Verschwenken des Trägergestells um eine geometrische Achse vorsieht, wobei diese Achse vorzugsweise parallel zu einer Längsmittelebene des Hecklastenträgers verläuft, die auch gleichzeitig bei am Kraftfahrzeug montiertem Hecklastenträger eine Längsmittelebene des Kraftfahrzeugs darstellt.

Ferner verläuft die Achse vorzugsweise ungefähr parallel zu einer Fahrbahn, auf welcher sich das Kraftfahrzeug bewegt.

Hinsichtlich der Festlegbarkeit der Einstelleinrichtung wurden bislang keine näheren Angaben gemacht.

So sieht eine besonders günstige Lösung vor, dass die Einstelleinrichtung zur Neigungseinstellung des Trägergestells relativ zur Kugelaufnahme durch Kraftschluss festlegbar ist.

Alternativ dazu wäre es aber auch denkbar, dass zur Neigungseinstellung eine formschlüssige Einstellung, beispielsweise durch eine Gewindespindel vorgesehen ist.

Ferner sieht eine vorteilhafte Lösung vor, dass die Neigungseinstellung des Trägergestells relativ zur Kugelhalsaufnahme durch ein Stellelement einstellbar ist, wobei das Stellelement nicht zwangsläufig eine Festlegung der Neigung des Trägergestells relativ zur Kugelhalsaufnahme in alle Bewegungsrichtungen bewirken muss, sondern beispielsweise so ausgebildet sein kann, dass mit diesem eine Bewegung in einer Neigungsrichtung begrenzbar ist.

Darüber hinaus betrifft die Erfindung eine Einheit aus Anhängekupplung und Hecklastenträger, die erfindungsgemäß gemäß einer der voranstehenden Ausführungsformen ausgebildet ist.

Schließlich betrifft die Erfindung auch ein Kraftfahrzeug mit einer Anhängekupplung und mit einem Hecklastenträger, das entsprechend einem oder mehreren der vorstehend beschriebenen Merkmale ausgebildet ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Seitenansicht eines Kraftfahrzeugs mit einer Anhängekupplung;
- Fig. 2: eine teilweise geschnittene Rückansicht längs Linie 2-2 in Fig. 1;

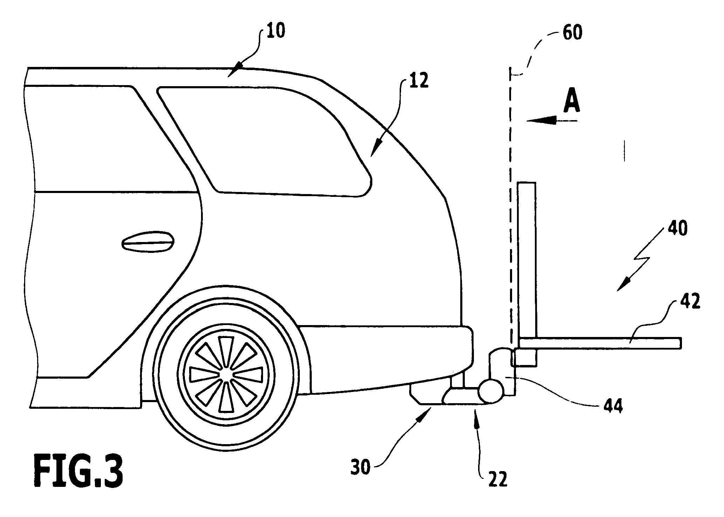

- Fig. 3: eine Ansicht ähnlich Fig. 1 des Kraftfahrzeugs mit einem ersten Ausführungsbeispiel eines erfindungsgemäßen Hecklastenträger;
- Fig. 4: eine teilweise perspektivische Darstellung einer an einem Kugelhals gehaltenen Kugelhalsaufnahme mit einer Einstelleinrichtung zur Neigungseinstellung eines Trägergestells des ersten Ausführungsbeispiels des erfindungsgemäßen Hecklastenträgers;
- Fig. 5: einen Schnitt längs Linie 5-5 in Fig. 4;
- Fig. 6: einen Schnitt längs Linie 6-6 in Fig. 5;
- Fig. 7: einen Schnitt längs Linie 7-7 in Fig. 6 bei in Fixierstellung stehender Verschiebevorrichtung und in Fixerstellung stehendem Haltefinger;
- Fig. 8: einen Schnitt ähnlich Fig. 7 bei in Freigabestellung stehender Verschiebevorrichtung und in Freigabestellung stehendem Haltefinger.
- Fig. 9: einen Schnitt ähnlich Fig. 5 durch ein zweites Ausführungsbeispiel eines erfindungsgemäßen Hecklastenträgers mit Kugelhals;
- Fig. 10: einen Schnitt längs Linie 10-10 in Fig. 9;
- Fig. 11: einen Schnitt ähnlich Fig. 7 durch das zweite Ausführungs-beispiel bei in Fixierstellung stehender Verschiebevorrichtung und
- Fig. 12: einen Schnitt ähnlich Fig. 8 durch das zweite Ausführungs-beispiel bei in Freigabestellung stehender Verschiebe-vorrichtung

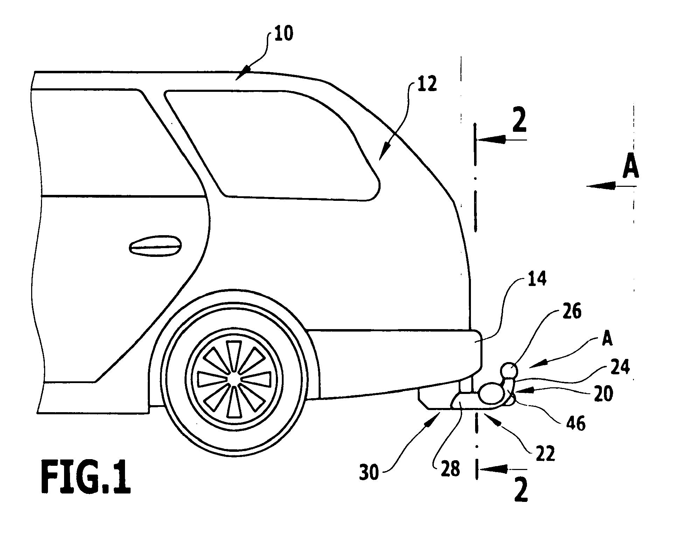

Ein in Fig. 1 dargestelltes, als Ganzes mit 10 bezeichnetes Kraftfahrzeug mit einer Karosserie 12 ist heckseitig der Karosserie, und zwar im Bereich eines heckseitigen Stoßfängers 14, mit einer als Ganzes mit 20 bezeichneten Anhängekupplung versehen.

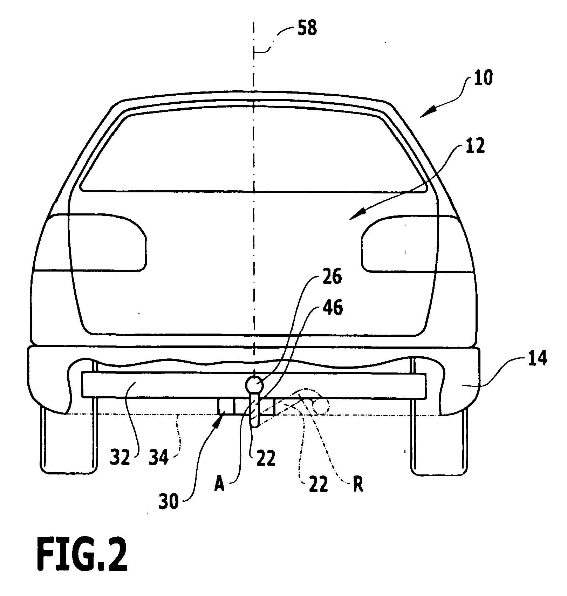

Die Anhängekupplung 20 umfasst einen Kugelhals 22, der an einem Ende 24 eine Kupplungskugel 26 trägt und mit seinem, dem Ende 24 gegenüberliegenden Ende 28, an der Karosserie 12 gehalten ist, beispielsweise mittels eines Schwenklagers 30, welche es erlaubt, wie insbesondere in Fig. 2 dargestellt, den Kugelhals 22 von einer Arbeitsstellung A in eine Ruhestellung R und umgekehrt zu verschwenken, wobei in der Ruhestellung R der Kugelhals 22 zwischen dem hinteren Stoßfänger 14 und der Karosserie 12, vorzugsweise im Bereich eines Querträgers 32 liegt, mit welchem das Schwenklager 30 mit der Karosserie verbindbar ist.

Dabei ist das Schwenklager 30 vorzugsweise so konzipiert, dass der Kugelhals 22 bei seiner Bewegung von der Ruhestellung R in die Arbeitsstellung A und umgekehrt unter einer einer Fahrbahn zugewandten Unterkante 34 des eckseitigen Stoßfängers 14 hindurch bewegbar ist.

Alternativ dazu ist es aber auch denkbar, den Kugelhals 22 beispielsweise abnehmbar an dem Querträger 32 zu fixieren.

Eine derartige Anhängekupplung 20 schafft die Möglichkeit, an dem Kraftfahrzeug 10 einen Hecklastenträger 40 zu montieren, welcher ausschließlich an dem Kugelhals 22 fixierbar und somit mittels des Kugelhalses 22 mit der Karosserie 12 verbindbar ist.

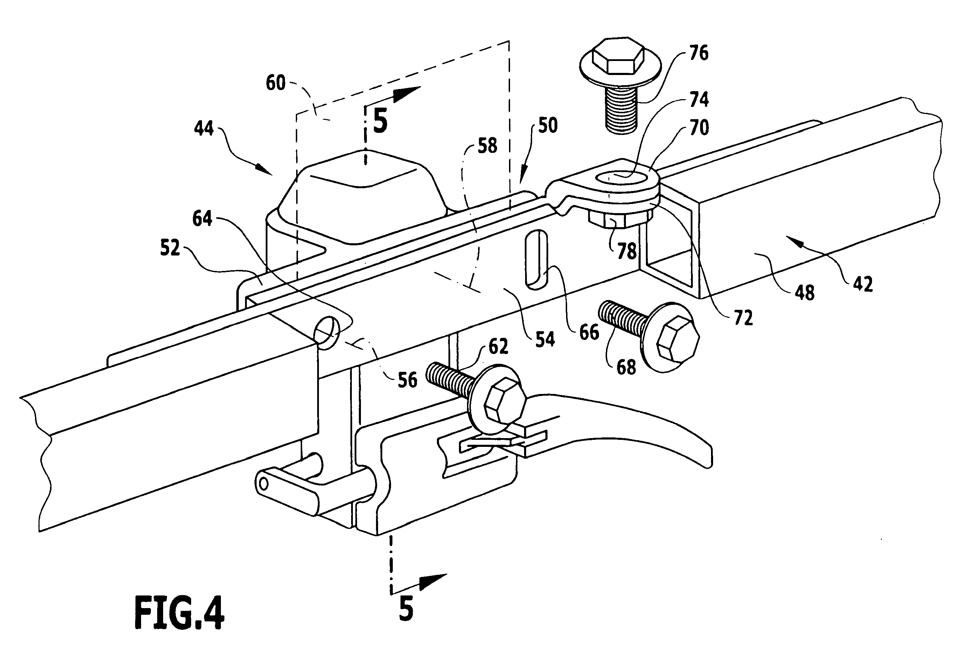

Der Hecklastenträger 40 umfasst dabei ein Trägergestell 42, an welchem Lasten, wie beispielsweise Fahrräder oder Gepäck, fixierbar sind und eine das Trägergestell 42 haltende Kugelhalsaufnahme 44, welche auf die Kupplungskugel 26 aufsetzbar ist und auch noch einen sich an die Kupplungskugel 26 anschließenden Endabschnitt 46 des Kugelhalses 22 übergreift. Vorzugsweise ist die Kugelhalsaufnahme 44 ausrichtbar mit dem Trägergestell 42, beispielsweise einem Grundträger 48 desselben, verbunden, wie in Fig. 4 dargestellt, wobei in die Einstellbarkeit der Kugelhalsaufnahme 44 relativ zu dem Grundträger 48 durch eine Einstelleinrichtung 50 möglich ist, die einen fest mit der Kugelhalsaufnahme 44 verbundenen Querarm 52 umfasst, an welchem der Grundträger 48 mit einem Mittelstück 54 einstellbar fixierbar ist, und zwar dadurch, dass das Mittelstück 54 um eine geometrische Achse 56 kippbar ist, die mindestens ungefähr parallel zu einer Längsmittelebene 58 der Karosserie 12, der Anhängekupplung 20 und des Hecklastenträgers 40 und die senkrecht zu einer Ebene 60 verläuft, in welcher das Mittelstück 54 des Grundträgers 48 relativ zu dem Querarm 52 bewegbar ist.

Vorzugsweise verläuft die Ebene 60 parallel zu dem Querträger 32 und quer zu einer Fahrbahn.

Die Drehbarkeit um die Achse 56 wird erreicht durch eine das Mittelstück 54 durchsetzende Halteschraube 62, die eine Bohrung 64 des Mittelstücks 54 durchsetzt und in den Querarm 52 einschraubbar ist. Damit bildet die Bohrung 64 zusammen mit der Halteschraube 62 die geometrische Achse 56, um welche das Mittelstück 54 relativ zum Querarm 52 in verschiedene Neigungsstellungen verschwenkbar ist.

Zur Fixierung des Mittelstücks 54 am Querarm 52 in verschiedenen Neigungsstellungen, ist im Abstand von der Achse 56 ein Langloch 66 vorgesehen, welches ebenfalls von einer Halteschraube 68 durchsetzt ist, die ihrerseits ebenfalls in den Querarm 52 einschraubbar ist.

Durch das Langloch 66 kann das Mittelstück 54 des Grundträgers 48 relativ zur Halteschraube 68 um einen begrenzten Winkelbereich verschwenken, wobei die Ausrichtung des Mittelstücks 54 relativ zum Querarm 52 dadurch fixierbar ist, dass beide Halteschrauben 62 und 68 fest angezogen werden und dadurch das Mittelstück 54 kraftschlüssig relativ zum Querarm 52 fixieren. Zur Einstellung der Ausrichtung des Mittelstücks 54 relativ zum Querarm 52 in verschiedenen Neigungsstellungen durch Drehung um die Achse 56 ist der Querarm 52 mit einem sich quer zur Ebene 60 erstreckenden Vorsprung 70 versehen, welcher zu einem entsprechenden, am Mittelstück 54 angeformten Vorsprung 72 parallel verläuft, wobei der Vorsprung 70 einen Durchbruch 74 aufweist, den eine Stellschraube 76 durchgreift, welche in eine am Vorsprung 72 fixierte Mutter einschraubbar ist, so dass durch die Stellschraube 76 der Abstand zwischen den Vorsprüngen 70 und 72 und somit die Neigung des Mittelstücks 54 um die Achse 56 relativ zum Querarm 52 einstellbar ist, zumindest dann, wenn das Trägergestell 42 die Tendenz hat, um die Achse 56 so zu verschwenken, dass sich die Vorsprünge 70 und 72 voneinander entfernen.

Mit der Stellschraube 76 besteht somit die Möglichkeit, die Neigung des Mittelstücks 54 um die Achse 56 relativ zum Querarm 52 einzustellen und dann durch Festziehen der Halteschrauben 62 und 68 relativ zum Querarm 52 zu fixieren.

Das Langloch 66 hat dabei eine derartige Ausdehnung, dass sich Toleranzen hinsichtlich der Fixierung der Kugelhalsaufnahme 44 am Kugelhals 22 so ausgleichen lassen, dass der Grundträger 48 sich ungefähr parallel zum Stoßfänger 14 des Kraftfahrzeugs 10 erstreckt.

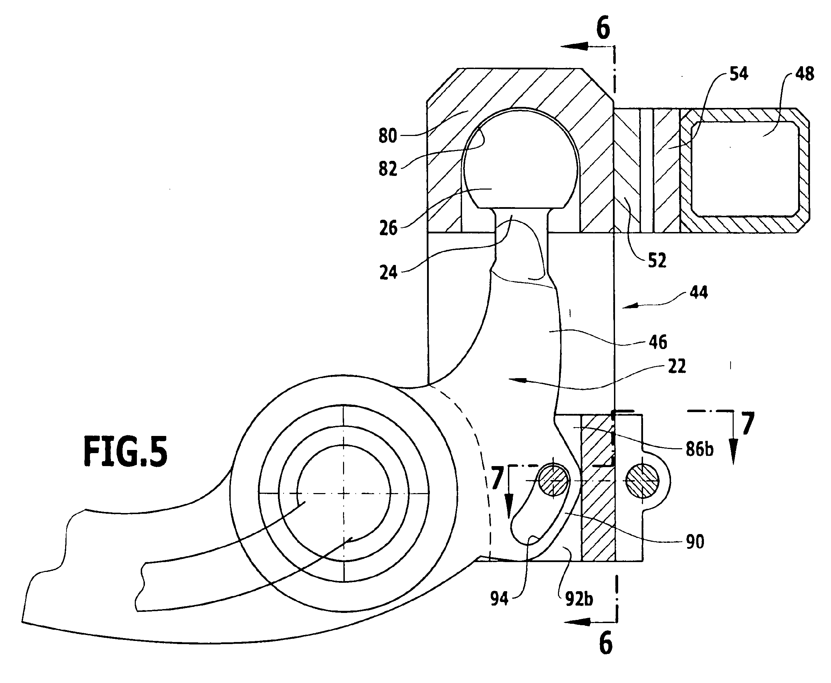

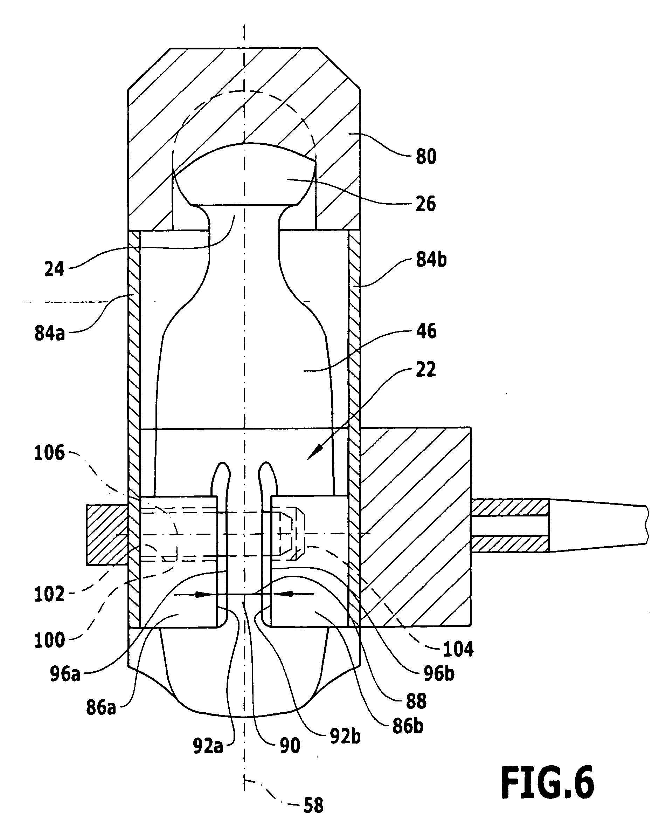

Die Kugelhalsaufnahme 44 umfasst, wie in Fig. 5 und 6 dargestellt, eine Kupplungskugelaufnahme 80, welche bei auf den Kugelhals 22 aufgesetzter Kugelhalsaufnahme 44 die Kupplungskugel 26 mit einer Eintiefung 82 aufnimmt.

Die in die Eintiefung 82 der Kupplungskugelaufnahme 80 eingreifende Kupplungskugel 26 bildet zusammen mit der Kupplungskugelaufnahme 80 ein Kugelgelenk, durch welches die Kugelhalsaufnahme 44 bei Belastung in Schwerkraftrichtung noch begrenzt um einen Mittelpunkt der Kupplungskugel 26 schwenkbar an dem Kugelhals 22 gehalten ist.

Ausgehend von der Kupplungskugelaufnahme 80 erstrecken sich entlang des Endabschnitts 46 des Kugelhalses auf gegenüberliegenden Seiten Fortsätze 84a und 84b, welche an ihren der Kupplungskugelaufnahme 80 gegenüberliegenden Endbereichen eine Klemmvorrichtung 85 bildende Klemmbacken 86a und 86b tragen die beiderseits eines Vorsprungs 90, der insbesondere einstückig an den Kugelhals 22 angeformt ist, anlegbar sind, um den Vorsprung 90 zwischen sich aufzunehmen, wobei die Klemmbacken 86a, 86b in einer Klemmstellung mit Klemmflächen 92a und 92b an dem Vorsprung 90 beiderseits anliegen und in einer Montagestellung den Vorsprung 90 freigeben.

Die Bewegbarkeit der Klemmbacken 86a, 86b relativ zueinander ist durch eine elastische Deformation der Fortsätze 84a, 84b möglich, die im unbeaufschlagten Zustand die Klemmbacken 86a, 86b in der Montagestellung halten und durch Beaufschlagung elastisch in Richtung aufeinander zu bewegbar sind, so dass auch die an diesen gehaltenen Klemmbacken 86a und 86b in einer quer zur Längsmittelebene 58 Klemmrichtung 88 aufeinander zu bewegbar sind, um den Vorsprung 90 zwischen sich einzuklemmen.

Alternativ dazu ist es auch möglich, einen der Fortsätze 84, beispielsweise den Fortsatz 84b steif auszubilden und im Wesentlichen nur den Fortsatz 84a durch elastische Deformationen oder auch durch ein Gelenk bewegbar zu gestalten.

Ferner ist der Vorsprung 90 noch mit einem Durchbruch 94 versehen, der insbesondere beim Ziehen eines Anhängers mittels des Kugelhalses 22 als Öse für ein Sicherungsseil dient.

Im Falle der auf den Kugelhals 22 aufgesetzten Kugelhalsaufnahme 44 dient der Durchbruch 94 zur formschlüssigen Fixierung der Kugelhalsaufnahme 44 an dem Kugelhals 22 dadurch, dass bei der Fixierung der Kugelhalsaufnahme 44 am Kugelhals 22 der Durchbruch 94 von einem an der Kugelhalsaufnahme 44 zwischen einer Freigabestellung und einer Fixierstellung bewegbar gelagerten Haltefinger 100 durchsetzt ist, der sich beispielsweise durch eine Führungsbohrung 102 in einem der Klemmbacken, beispielsweise im Klemmbacken 86a, hindurch erstreckt und durch diese Führungsbohrung 102relativ zum Klemmbacken 86a geführt ist und in seiner den Durchbruch 94 durchsetzenden Fixierstellung sich außerdem noch in eine Aufnahmebohrung 104 im gegenüberliegenden Klemmbacken, beispielsweise im Klemmbacken 86b, hineinerstreckt, die fluchtend zur Führungsbohrung 102 angeordnet ist, so dass der Haltefinger 100 gegen Bewegungen quer zu seiner Längsachse 106 in seiner den Durchbruch 94 durchsetzenden Fixierstellung sowohl in der Führungsbohrung 102 als auch in der Aufnahmebohrung 104 in den Klemmbacken 86a und 86b geführt ist und damit auch die gesamte Kugelhalsaufnahme 44 so am Kugelhals 22 festlegt, dass die Kupplungskugel 26 in der Eintiefung 82 der Kupplungskugelaufnahme 80 formschlüssig geführt ist und in dieser verbleibt.

Damit kann mit dem Haltefinger 100 die Kugelhalsaufnahme 44 zuverlässig an dem Kugelhals 22 fixiert werden.

Darüber hinaus lassen sich außerdem noch die Klemmbacken 86a und 86b in ihrer Klemmstellung mit ihren Klemmflächen 92a und 92b beiderseits des Vorsprungs 90 an den Durchbruch 94 umgebenden Anlageflächen 96a und 96b kraftbeaufschlagt anlegen, um zusätzlich eine definierte Ausrichtung der gesamten begrenzt schwenkbar an der Kupplungskugel 22 abgestützten Kugelhalsaufnahme 44 relativ zum Kugelhals 22 zu erreichen.

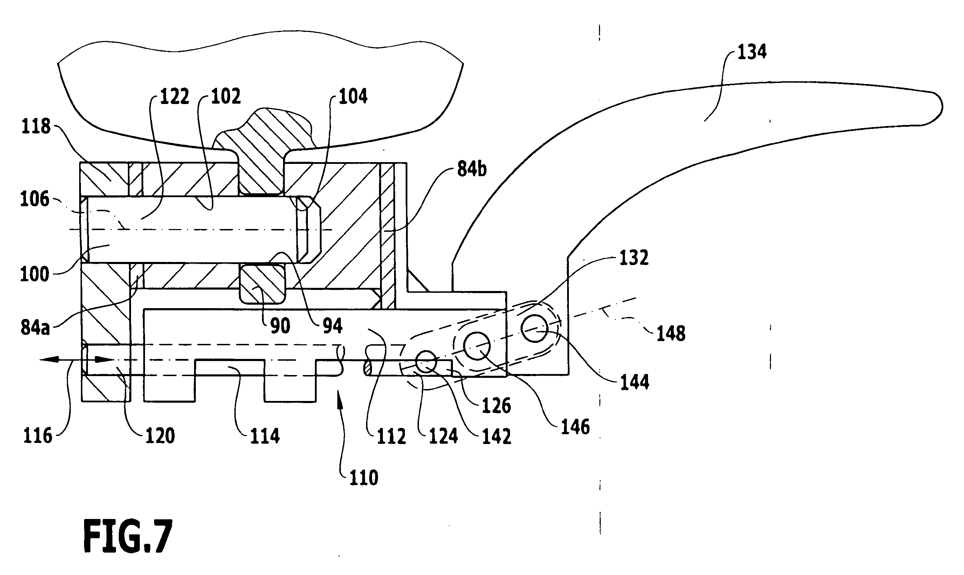

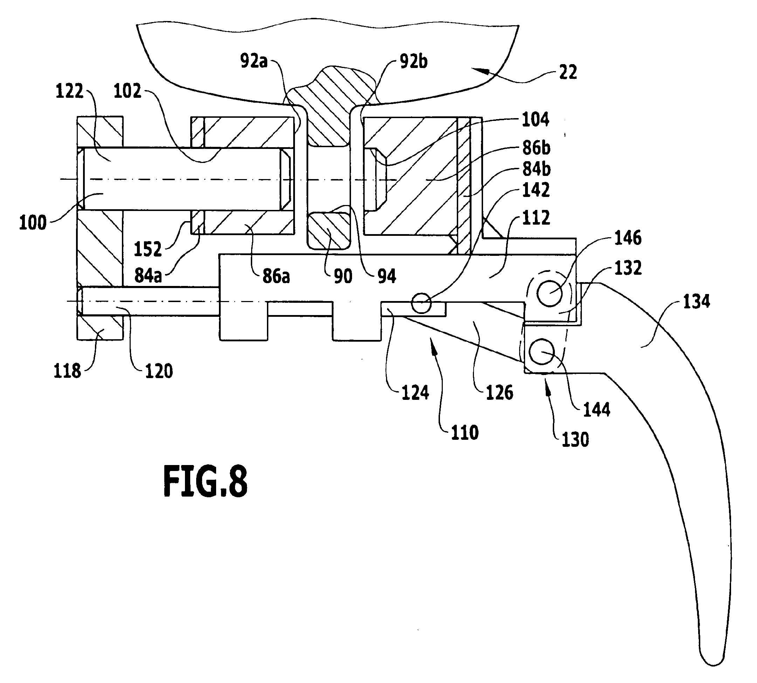

Zum Bewegen des Haltefingers 100 zwischen der in den Fig. 6 und 7 dargestellten Fixierstellung in die in Fig. 8 dargestellte Freigabestellung, in welcher der Haltefinger 100 nicht mehr den Durchbruch 94 des Vorsprungs 90 durchgreift, ist eine als Ganzes mit 110 bezeichnete Verschiebevorrichtung vorgesehen, welche an einem der Fortsätze, beispielsweise am Fortsatz 84b, mit einer Vorrichtungsbasis 112 gehalten ist, in welcher ein Verschiebekörper 114 in einer quer zur Längsmittelebene 58 verlaufenden Verschieberichtung 116 bewegbar geführt ist, wobei der Verschiebekörper 114 an einem Ende 120 einen Arm 118 trägt, an welchem der Haltefinger 100 gehalten ist, wobei sich die Verschieberichtung 116 im Wesentlichen parallel zur Längsachse 106 des Haltefingers 100 erstreckt, während sich der Arm 118 quer zur Verschieberichtung 116 und quer zur Längsrichtung 106 des Haltefingers 100 erstreckt und das Ende 120 des Verschiebekörpers 114 mit einem Ende 122 des Haltefingers 100 verbindet.

Ferner ist der Verschiebekörper 114 an einem dem Ende 120 gegenüberliegenden Ende 124 gelenkig mit einem ersten Hebelarm 126 einer Kniehebelanordnung 130 verbunden, welche zusätzlich zum ersten Hebelarm 126 einen gelenkig mit diesem verbundenen zweiten Hebelarm 132 umfasst, der Teil eines Handbetätigungshebels 134 ist.

Ein den ersten Hebelarm 126 einerseits mit dem Verschiebekörper 114 gelenkig verbindendes Gelenk 142, ein den ersten Hebelarm 126 in einem dem Gelenk 142 gegenüberliegenden Bereich mit dem zweiten Hebelarm 132 verbindendes Gelenk 144 und ein den zweiten Hebelarm 132 an der Vorrichtungsbasis 112 lagerndes Gelenk 146, die alle um zueinander parallele Gelenkachsen drehbar sind, definieren die Gelenke der Kniehebelanordnung 130, welche in der Freigabestellung des Haltefingers 100 Eckpunkte eines Dreiecks bilden, wobei der Verschiebekörper 114 in der Verschieberichtung 116 so weit verschoben ist, dass der über den Arm 118 mit diesem verbundene Haltefinger 100 in seiner Freigabestellung steht, das heißt lediglich durch die Führungsbohrung 102 in dem Klemmbacken 86a geführt gehalten ist, jedoch nicht über die Klemmfläche 92a desselben übersteht und somit nicht den Durchbruch 94 des Vorsprungs 90 durchgreift.

Die Kniehebelanordnung 130 lässt sich jedoch aber auch in eine in Fig. 7 dargestellte Stellung bewegen, in welcher die Gelenke 142, 144 und 146 miteinander im Wesentlichen längs einer Verbindungslinie 148 aufeinanderfolgend, jedoch das Gelenk 144 bezogen auf die durch die Gelenke 142 und 146 gezogene Verbindungslinie 148 in einer Übertotpunktstellung steht und somit stabil steht und sich nicht aus dieser Übertotpunktstellung lösen kann.

In dieser Übertotpunktstellung wird durch den Arm 118 der Haltefinger 100 in seine Fixierstellung, dargestellt in Fig. 6 und 7, bewegt, in welcher der Haltefinger 100 sowohl in der Führungsbohrung 102 als auch in der Aufnahmebohrung 104 geführt ist und außerdem den Durchbruch 94 des Vorsprungs 90 durchgreift, um die Kugelhalsaufnahme 44 an dem Vorsprung 90 formschlüssig zu fixieren.

Ferner erfolgt in der Fixierstellung der Verschiebevorrichtung 110 ein Verschieben des Arms 118 derart, dass dieser auch noch den Fortsatz 84a an seiner dem Klemmbacken 86a abgewandten Seite 152 beaufschlagt und somit den Fortsatz 84a in Richtung des Fortsatzes 84b bewegt und somit auch gleichzeitig die Klemmbacken 86a, 86b aufeinander zu in der Klemmrichtung 88 bewegt, so dass dadurch der Vorsprung 90 zwischen den Klemmflächen 92a und 92b der Klemmbacken 86a bzw. 86b einklemmbar ist.

Die Verschiebevorrichtung 110 stellt somit durch die Kniehebelanordnung 130 gleichzeitig eine Spannvorrichtung zum Verspannen der Klemmbacken 86a und 86b mit den Klemmflächen 92a und 92b mit dem Vorsprung 90 dar, um beim Übergang von der Freigabestellung in die Fixierstellung den Vorsprung 90 zwischen diesen in der Klemmstellung einzuklemmen oder beim Übergang von der Fixierstellung in die Freigabestellung die Klemmbacken 86a und 86b auseinander und somit vom Vorsprung 90 weg in die Montagestellung zu bewegen, wobei gleichzeitig auch noch beim Übergang von der Freigabestellung in die Fixierstellung der Haltefinger 100 durch den Durchbruch 94 hindurchgeschoben wird oder beim Übergang von der Fixierstellung in die Freigabestellung aus dem Durchbruch 94 herausbewegt wird.

Durch den Haltefinger 100 und die Klemmbacken 86a, 86b besteht somit die Möglichkeit, sowohl eine formschlüssige Fixierung der Kugelhalsaufnahme 44 am Kugelhals 22 als auch gleichzeitig eine definierte Ausrichtung der Kugelhalsaufnahme 44 relativ zum Kugelhals 22 durch Einklemmen des Vorsprungs 90 zwischen den Klemmbacken 86a und 86b zu erreichen.

Die Klemmvorrichtung 85 mit den Klemmbacken 86a, 86b der Haltefinger 100 und die Verschiebevorrichtung 110 bilden zusammen eine an der Kugelhalsaufnahme 44 angeordnete Fixiereinrichtung 150, mit welcher die Kugelhalsaufnahme 44 und mit dieser der Hecklastenträger 40 zuverlässig und in definierter Ausrichtung an dem Kugelhals 22 fixierbar sind.

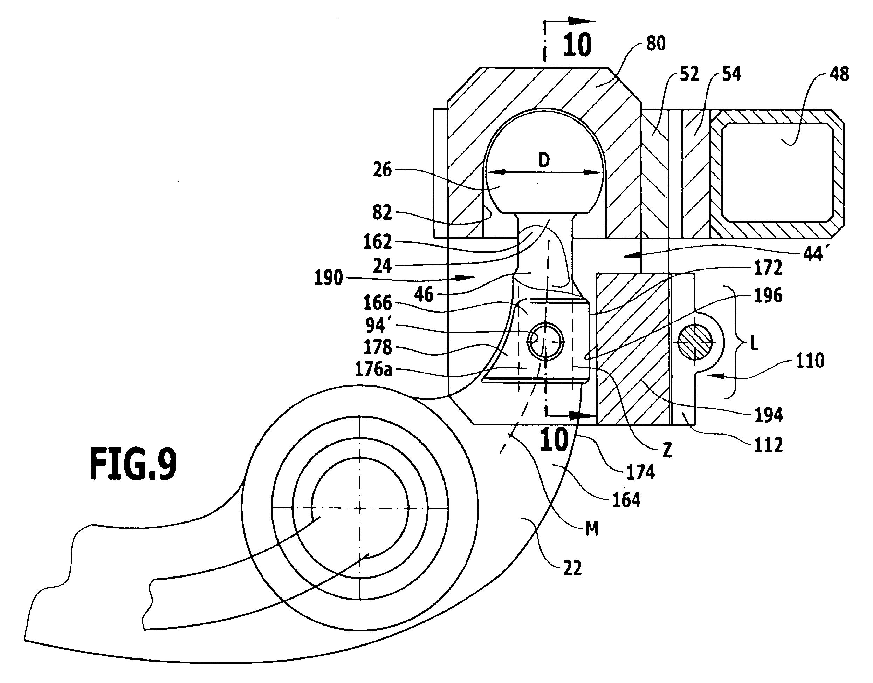

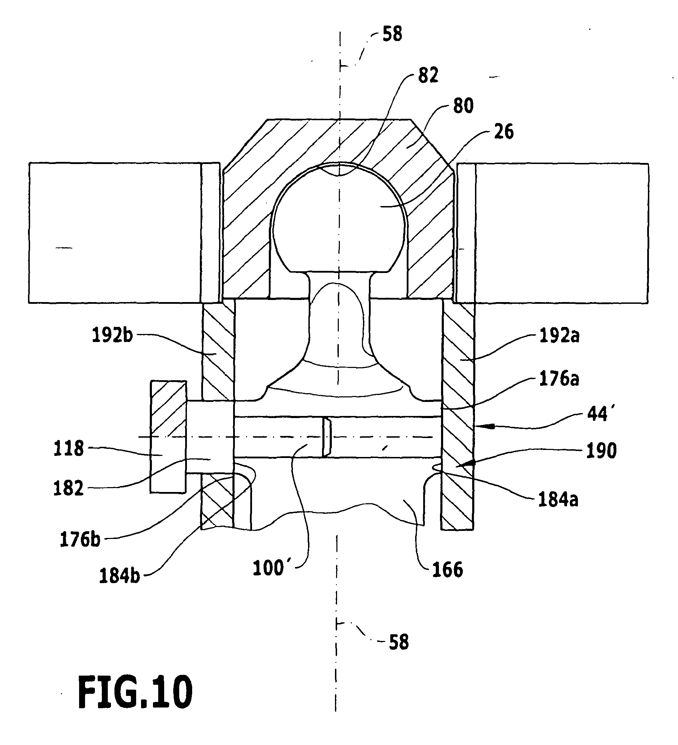

Bei einem zweiten Ausführungsbeispiel eines erfindungsgemäßen Hecklastenträgers, dargestellt in den Figuren 9 bis 12 sind diejenigen Elemente, die mit denen des ersten Ausführungsbeispiels identisch sind, mit den selben Bezugszeichen versehen, so dass hinsichtlich der Beschreibung derselben vollinhaltlich auf die Ausführungen zum ersten Ausführungsbeispiel verwiesen werden kann.

Bei dem Kugelhals 22 ist insbesondere der bis zum Ende 24 des Kugelhalses 22 reichende Endabschnitt 46 so ausgebildet, dass dieser in unmittelbarem Anschluss an die Kupplungskugel 26 einen Zylinderabschnitt 162 aufweist, der dann auf einer der Kupplungskugel 26 gegenüberliegenden Seite in einen einen größeren Durchmesser als der Zylinderabschnitt 162 aufweisenden Tragabschnitt 164 übergeht, welcher vorzugsweise durch eine gekrümmte Formgebung bis zum Ende 28 verläuft und beispielsweise noch mit einer Aufnahme für eine Kontakteinheit versehen ist.

Der sich an den Zylinderabschnitt 162 anschließende Tragabschnitt 164 bildet einen unmittelbar auf den Zylinderabschnitt 162 folgenden Haltebereich 166, der sich auf einer der Kupplungskugel 26 gegenüberliegenden Seite des Zylinderabschnitts 162 ausgehend von dem Übergang vom Zylinderabschnitt 162 in den Tragabschnitt 164 entlang des Tragabschnitts 164 über eine Länge L ausdehnt, welche vorzugsweise maximal dem Eineinhalbfachen eines Durchmessers D der Kupplungskugel 26 entspricht.

In dem Haltebereich 166 ist der diesen durchsetzenden Durchbruch 94' vorgesehen, welcher so angeordnet ist, dass dieser einen durch eine Außenkontur des Zylinderabschnitts 162 definierten geometrischen Zylinderraum Z durchsetzt, der sich in den Haltebereich 166 hineinerstreckt.

Insbesondere durchsetzt der Durchbruch 94' eine Mittellinie M des Haltebereichs 166.

An den Haltebereich 166 ist eine Abstützfläche 172 angeformt, welche auf einer dem Ende 28 des Kugelhalses 22 und der Karosserie 12 des Kraftfahrzeugs abgewandten Rückseite 174 des Kugelhalses 22 angeordnet ist.

Ferner sind in dem Haltebereich 166 beiderseits der Abstützfläche 172 Seitenanlageflächen 176a und 176b vorgesehen.

Vorzugsweise werden die Abstützfläche 172 und die Seitenanlageflächen 176a, 176b dadurch gebildet, dass der Tragabschnitt 164 des Kugelhalses 22 im Haltebereich 166 mit einer Aufdickung 178 versehen ist, welche es erlaubt, abweichend von einer gerundeten Querschnittsform des Tragabschnitts 164 im Wesentlichen ebene Abstützflächen 172 sowie Seitenanlageflächen 176 zu realisieren.

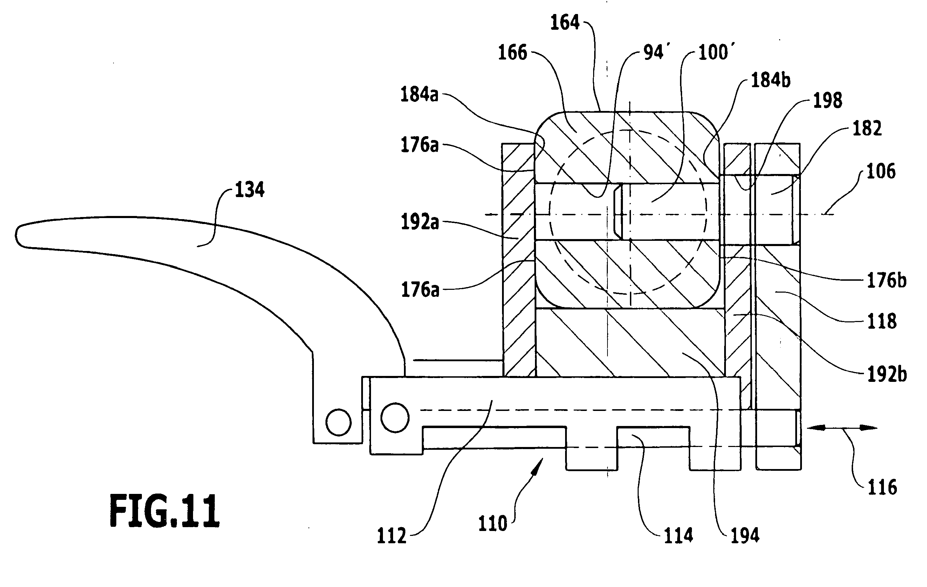

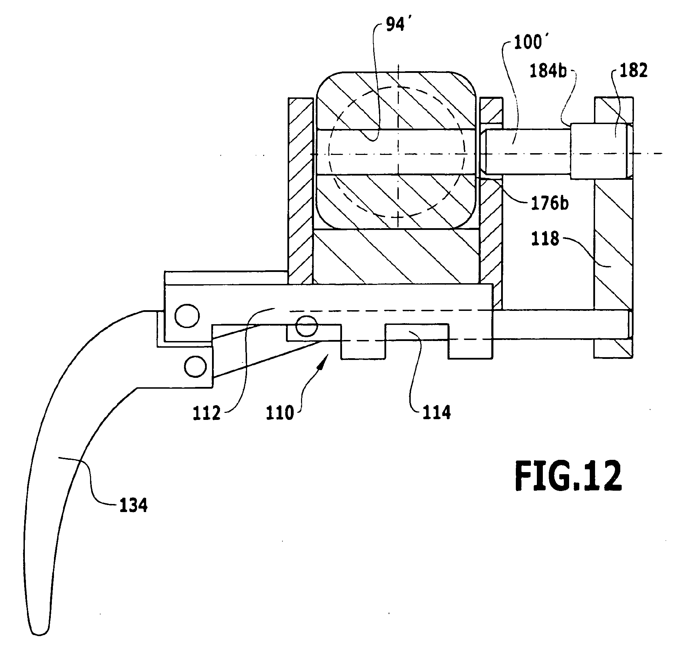

Darüber hinaus ist in dem Haltebereich 166 der Durchbruch 94' vorgesehen, welcher den gesamten Haltebereich 166 in Richtung quer zu einer Krümmungsebene des Kugelhalses 22 und senkrecht zur Fahrzeuglängsmittelebene 58 bei in Arbeitsstellung stehendem Kugelhals 22 durchsetzt und in welchen der Haltefinger 100' beim zweiten Ausführungsbeispiel eingreift. Der Haltefinger 100' ist dabei, wie in Figur 11 und 12 dargestellt, an dem Verschiebekörper 114 der als Ganzes mit 110 bezeichneten Verschiebeeinrichtung gehalten, die außerdem noch die Vorrichtungsbasis 112 und den Arm 118 aufweist, welcher den Haltefinger 100' führt, wobei bei diesem Ausführungsbeispiel an dem Arm 118 ein den Haltefinger 100' tragender Klemmkörper 182 angeordnet ist, der eine radial über den Haltefinger 100' überstehende Klemmfläche 184b bildet, mit welcher die Seitenanlagefläche 176b des Haltebereichs 186 des Kugelhalses 22 beaufschlagbar ist, wenn der Haltefinger 100' in den Durchbruch 94' eingreift und die Verschiebevorrichtung 110 in der in Fig. 11 dargestellten Fixierstellung steht.

Erfolgt dagegen, wie in Fig. 12 dargestellt, ein Überführen der Verschiebevorrichtung 110 in die Freigabestellung, so ist der Haltefinger 100' außer Eingriff mit dem Durchbruch 94' und die Klemmfläche 184b des Klemmkörpers 182 liegt nicht mehr an der Seitenanlagefläche 176b an.

Beim zweiten Ausführungsbeispiel ist die Kupplungskugelaufnahme 80 in gleicher Weise ausgebildet wie bei dem ersten Ausführungsbeispiel, allerdings erstreckt sich ausgehend von der Kupplungskugelaufnahme 80 ein Führungskörper 190 in Richtung des Tragabschnitts 164 und über den Haltebereich 166 desselben hinweg, wobei der Führungskörper 190 Führungswangen 192a und 192b aufweist, die die Seitenanlageflächen 176a und 176b übergreifen und an diesen mit Spiel anlegbar sind.

Zwischen den Führungswangen 192a, 192b liegt noch ein Stützelement 194, das mit einer an der Abstützfläche 172 anlegbaren Stützfläche 196 versehen ist und der die Verschiebeeinrichtung 110 trägt.

Auch bei diesem Ausführungsbeispiel bilden die Kupplungskugelaufnahme 80 und die Kupplungskugel 22 insgesamt ein Kugelgelenk zur Abstützung des Hecklastenträgers 40, das um einen Kugelmittelpunkt der Kupplungskugel 22 allseitig begrenzt verkippbar ist, wie im Zusammenhang bereits mit dem ersten Ausführungsbeispiel beschrieben ist.

Beim Aufsetzen der Kupplungskugelaufnahme 80 auf die Kupplungskugel 26 ist somit durch den Führungskörper 190 der Hecklastenträger 40 gegen ein Kippen nach hinten dadurch stabilisiert, dass das Stützelement 194 des Führungskörpers 190 mit der Stützfläche 196 an der Abstützfläche 172 des Kugelhalses 22 anliegt, und gegen ein seitliches Kippen dadurch stabilisiert, dass der Führungskörper 190 sich mit den Führungswangen 192a, 192b an den Seitenanlagefläche 176a, 176b abstützen kann.

Zur im Wesentlichen spielfreien Fixierung des Hecklastenträgers an dem Kugelhals 22 ist der Haltebereich 166 mit den Seitenanlageflächen 176a und 176b zwischen dem Klemmkörper 182 mit der Klemmfläche 184b, die auf die Seitenanlagefläche 176b wirkt, und der Führungswange 192a, die auf die Seitenanlagefläche 176a mit einer Klemmfläche 184b wirkt, einklemmbar, und zwar dann, wenn die Verschiebevorrichtung 110 in der Fixierstellung steht.

Zur stabilen Führung des Haltefingers 100' ist der Klemmkörper 182 seinerseits in einer Führungsbohrung 198 der Führungswange 192b gegen Bewegungen quer zu seiner Längsachse 106 geführt, die ihrerseits wiederum parallel zu der Verschieberichtung 116 verläuft.

Damit ist auch bei dem zweiten Ausführungsbeispiel eine stabile Fixierung des Hecklastenträgers 40 relativ zum Kugelhals 22 realisierbar.

## Patentansprüche

1. Hecklastenträger umfassend ein Trägergestell (42), eine am Trägergestell (42) gehaltene Kugelhalsaufnahme (44), die auf einen eine Kupplungskugel (26) tragenden Endabschnitt (46) eines Kugelhalses (22) einer Anhängekupplung (20) aufsetzbar ist, und eine an der Kugelhalsaufnahme (44) gehaltene Fixiereinrichtung (150), wobei die Fixiereinrichtung (150) einen Haltefinger (100) aufweist, und wobei die Fixiereinrichtung (150) so ausgebildet ist, dass der Haltefinger (100) in einer Fixierstellung in einen Durchbruch (94) am Kugelhals (22) eingreift oder diesen durchgreift und in einer Freigabestellung außer Eingriff mit dem Durchbruch (94) steht.

2. Hecklastenträger nach Anspruch 1, **dadurch gekennzeichnet, dass** der Haltefinger (100) an einer Verschiebevorrichtung (110) gehalten ist, mit welcher der Haltefinger (100) von der Freigabestellung in die Fixierstellung oder umgekehrt bewegbar ist.

3. Hecklastenträger nach Anspruch 2, **dadurch gekennzeichnet, dass** die Verschiebevorrichtung (110) eine Vorrichtungsbasis (112) aufweist, die an der Kugelhalsaufnahme (44) gehalten ist und dass insbesondere der Haltefinger (100) mit einem an der Vorrichtungsbasis (112) verschiebbar gelagerten Verschiebekörper (114) zwischen der Freigabestellung und der Fixierstellung bewegbar ist.

4. Hecklastenträger nach einem der voranstehenden Ansprüche, **dadurch gekennzeichnet, dass** der Haltefinger (100) in einer Führungsbohrung (102, 198) der Kugelhalsaufnahme (44) bewegbar geführt ist.

5. Hecklastenträger nach dem Oberbegriff des Anspruchs 1 oder nach einem der voranstehenden Ansprüche, **dadurch gekennzeichnet, dass** an der Kugelhalsaufnahme (44) eine Klemmvorrichtung (85) vorgesehen ist, mit welcher eine Klemmverbindung zwischen der Kugelhalsaufnahme (44) und dem Kugelhals (22) herstellbar ist.

6. Hecklastenträger nach Anspruch 5, **dadurch gekennzeichnet, dass** die Klemmelemente (86, 182, 192a) in ihrer Klemmstellung von der in der Fixierstellung stehenden Verschiebevorrichtung (110) beaufschlagt sind.

7. Hecklastenträger nach einem der voranstehenden Ansprüche, **dadurch gekennzeichnet, dass** der Durchbruch (94,94') an dem Kugelhals (22) angeordnet ist.

8. Hecklastenträger nach Anspruch 7, **dadurch gekennzeichnet, dass** der Durchbruch (94') in einem Haltebereich (166) des Kugelhalses (22) angeordnet ist, der auf einer der Kupplungskugel (26) gegenüberliegenden Seite eines sich unmittelbar an die Kupplungskugel (26) anschließenden Zylinderabschnitts (162) liegt.

9. Hecklastenträger nach einem der Ansprüche 1 bis 7, **dadurch gekennzeichnet, dass** der Durchbruch (94) an einem Vorsprung (90) des Kugelhalses (22) angeordnet ist.

10. Hecklastenträger nach einem der voranstehenden Ansprüche, **dadurch gekennzeichnet, dass** die Kugelhalsaufnahme (44) eine Kupplungskugelaufnahme (80) aufweist.

11. Hecklastenträger nach einem der voranstehenden Ansprüchen, **dadurch gekennzeichnet, dass** der Kugelhals (22) eine Abstützfläche (172) für die Kugelhalsaufnahme (44) aufweist.

12. Hecklastenträger nach einem der voranstehenden Ansprüche, **dadurch gekennzeichnet, dass** der Kugelhals (22) Seitenanlageflächen (176a, 176b) für die Kugelhalsaufnahme (44) aufweist.

13. Hecklastenträger nach einem der voranstehenden Ansprüche, **dadurch gekennzeichnet, dass** das Trägergestell (42) und die Kugelhalsaufnahme (44) durch eine Einstelleinrichtung (50) relativ zueinander ausrichtbar sind.

14. Hecklastenträger nach Anspruch 13, **dadurch gekennzeichnet, dass** mit der Einstelleinrichtung (50) eine Neigungseinstellung des Trägergestells (42) des Hecklastenträgers (40) möglich ist.

15. Einheit aus Anhängekupplung (20) und Hecklastenträger (40), **dadurch gekennzeichnet, dass** dieser nach einem der voranstehenden Ansprüche ausgebildet ist.

## Claims

1. Rear load carrier comprising a carrier frame (42), a ball neck receptacle (44) held on the carrier frame (42) and attachable to an end section (46) of a ball neck (22) of a trailer coupling (20), said end section bearing a coupling ball (26), and a fixing device (150) held on the ball neck receptacle (44), wherein the fixing device (150) has a retaining finger (100), and wherein the fixing device (150) is designed such that the retaining finger (100) engages in or passes through a passage (94) in the ball neck (22) in a fixing position and in a release position is not in engagement with the passage (94).

2. Rear load carrier as defined in claim 1, **characterized in that** the retaining finger (100) is held on a displacing device (110) for moving the retaining finger (100) from the release position into the fixing position or vice versa.

3. Rear load carrier as defined in claim 2, **characterized in that** the displacing device (110) has a device base (112) held on the ball neck receptacle (44) and that the retaining finger (100), in particular, is movable between the release position and the fixing position with a displacing member (114) mounted for displacement on the device base (112).

4. Rear load carrier as defined in any one of the preceding claims, **characterized in that** the retaining finger (100) is guided for movement in a guide bore (102, 198) of the ball neck receptacle (44).

5. Rear load carrier as defined in the preamble to claim 1 or as defined in any one of the preceding claims, **characterized in that** a clamping device (85) is provided on the ball neck receptacle (44) for providing a clamping connection between the ball neck receptacle (44) and the ball neck (22).

6. Rear load carrier as defined in claim 5, **characterized in that** the clamping elements (86, 182, 192a) are acted upon in their clamping position by the displacing device (110) located in the fixing position.

7. Rear load carrier as defined in any one of the preceding claims, **characterized in that** the passage (94, 94') is arranged in the ball neck (22).

8. Rear load carrier as defined in claim 7, **characterized in that** the passage (94') is arranged in a retaining area (166) of the ball neck (22) located on a side of a cylinder section (162) opposite the coupling ball (26), said cylinder section adjoining directly onto the coupling ball (26).

9. Rear load carrier as defined in any one of claims 1 to 7, **characterized in that** the passage (94) is arranged in a projection (90) of the ball neck (22).

10. Rear load carrier as defined in any one of the preceding claims, **characterized in that** the ball neck receptacle (44) has a coupling ball receptacle (80).

11. Rear load carrier as defined in any one of the preceding claims, **characterized in that** the ball neck (22) has a supporting surface (172) for the ball neck receptacle (44).

12. Rear load carrier as defined in any one of the preceding claims, **characterized in that** the ball neck (22) has side contact surfaces (176a, 176b) for the ball neck receptacle (44).

13. Rear load carrier as defined in any one of the preceding claims, **characterized in that** the carrier frame (42) and the ball neck receptacle (44) can be aligned relative to one another by means of an adjusting device (50).

14. Rear load carrier as defined in claim 13, **characterized in that** an adjustment of the inclination of the carrier frame (42) of the rear load carrier (40) is possible with the adjusting device (50).

15. Unit consisting of trailer coupling (20) and rear load carrier (40), **characterized in that** this is designed in accordance with any one of the preceding claims.

## Revendications

1. Porte-charge arrière comportant un bâti porteur (42), un logement pour col de boule d'attelage (44) maintenu sur le bâti porteur (42) qui peut être placé sur une section d'extrémité (46) d'un col de boule (22) d'un attelage (20), la section d'extrémité (46) portant une boule d'attelage (26), et un dispositif de fixation (150) maintenu sur le logement pour col de boule d'attelage (44), le dispositif de fixation (150) présentant un doigt de retenue (100) et le dispositif de fixation (150) étant réalisé de sorte que le doigt de retenue (100) s'engage dans une position de fixation dans un percement (94) sur le col de boule d'attelage (22) ou le traverse et se trouve désengagé du percement (94) dans une position de libération.

2. Porte-charge arrière selon la revendication 1, **caractérisé en ce que** le doigt de retenue (100) est maintenu sur un dispositif de déplacement (110) permettant de déplacer le doigt de retenue (100) de la position de libération à la position de fixation ou inversement.

3. Porte-charge arrière selon la revendication 2, **caractérisé en ce que** le dispositif de déplacement (110) présente une base de dispositif (112) qui est maintenue sur le logement pour col de boule d'attelage (44) et **en ce qu'**en particulier le doigt de retenue (100) peut être déplacé avec un corps de déplacement (114) logé de manière mobile sur la base de dispositif (112) entre la position de libération et la position de fixation.

4. Porte-charge arrière selon l'une quelconque des revendications précédentes, **caractérisé en ce que** le doigt de retenue (100) est guidé de manière mobile dans un perçage de guidage (102, 198) du logement pour col de boule d'attelage (44).

5. Porte-charge arrière selon le préambule de la revendication 1 ou selon l'une quelconque des revendications précédentes, **caractérisé en ce qu'**un dispositif de serrage (85) est prévu sur le logement pour col de boule d'attelage (44), avec lequel une liaison de serrage peut être établie entre le logement pour col de boule d'attelage (44) et le col de boule d'attelage (22).

6. Porte-charge arrière selon la revendication 5, **caractérisé en ce que** les éléments de serrage (86, 182, 192a) sont sollicités dans leur position de serrage par le dispositif de déplacement (110) en position de fixation.

7. Porte-charge arrière selon l'une quelconque des revendications précédentes, **caractérisé en ce que** le percement (94, 94') est disposé sur le col de boule d'attelage (22).

8. Porte-charge arrière selon la revendication 7, **caractérisé en ce que** le percement (94') est disposé dans une zone de retenue (166) du col de boule d'attelage (22) qui se trouve sur un côté opposé à la boule d'attelage (26) d'une section cylindrique (162) directement contiguë à la boule d'attelage (26).

9. Porte-charge arrière selon l'une quelconque des revendications 1 à 7, **caractérisé en ce que** le percement (94) est disposé sur une saillie (90) du col de boule d'attelage (22).

10. Porte-charge arrière selon l'une quelconque des revendications précédentes, **caractérisé en ce que** le logement pour col de boule d'attelage (44) présente un logement pour boule d'attelage (80).

11. Porte-charge arrière selon l'une quelconque des revendications précédentes, **caractérisé en ce que** le col de boule d'attelage (22) présente une surface d'appui (172) pour le logement pour col de boule d'attelage (44).

12. Porte-charge arrière selon l'une quelconque des revendications précédentes, **caractérisé en ce que** le col de boule d'attelage (22) présente des surfaces d'appui latérales (176a, 176b) pour le logement pour col de boule d'attelage (44).

13. Porte-charge arrière selon l'une quelconque des revendications précédentes, **caractérisé en ce que** le bâti porteur (42) et le logement pour col de boule d'attelage (44) sont orientables l'un par rapport à l'autre par un dispositif de réglage (50).

14. Porte-charge arrière selon la revendication 13, **caractérisé en ce que** le dispositif de réglage (50) permet de régler l'inclinaison du bâti porteur (42) du porte-charge arrière (40).

15. Unité composée d'un attelage (20) et d'un porte-charge arrière (40), **caractérisée en ce que** ce dernier ci est réalisé selon l'une quelconque des revendications précédentes.
